(19) Europäisches Patentamt
European Patent Office
Office européen des brevets

(11) Veröffentlichungsnummer: **0 002 221**
**B1**

(12) **EUROPÄISCHE PATENTSCHRIFT**

(45) Veröffentlichungstag der Patentschrift: **19.05.82**

(51) Int. Cl.³: **C 08 F 10/00**, C 08 F 4/64

(21) Anmeldenummer: **78101403.0**

(22) Anmeldetag: **18.11.78**

(54) **Verfahren zur Herstellung eines Mischkatalysators und seine Verwendung zur Polymerisation von 1-Olefinen.**

(30) Priorität: **25.11.77 DE 2752577**

(43) Veröffentlichungstag der Anmeldung:
**13.06.79 Patentblatt 79/12**

(45) Bekanntmachung des Hinweises auf die Patenterteilung:
**19.05.82 Patentblatt 82/20**

(84) Benannte Vertragsstaaten:
**BE DE FR GB NL**

(56) Entgegenhaltungen:
**DE - A - 2 111 455**
**DE - A - 2 146 685**
**DE - A - 2 259 516**
**DE - A - 2 329 641**
**DE - A - 2 455 415**

(73) Patentinhaber: **HOECHST AKTIENGESELLSCHAFT**
**Postfach 80 03 20**
**D-6230 Frankfurt/Main 80 (DE)**

(72) Erfinder: **Franke, Rainer, Dr.**
**Geisenheimer Strasse 88**
**D-6000 Frankfurt/Main 71 (DE)**
Erfinder: **Diedrich, Bernd, Dr.**
**Ulmenweg 10**
**D-6236 Eschborn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

EP 0 002 221 B1

# Verfahren zur herstellung eines mischkatalysators und seine verwendung zur polymerisation von 1-olefinen

Polymerisationskatalysatoren, die durch Umsetzung von Magnesiumalkoholaten und/oder komplexen Magnesiumalkoholaten mit Übergangsmetallhalogeniden gebildet werden, sind bekannt (DE—B 17 95 197, DE—A 2 000 566, DE—C 1 957 679).

Diese Katalysatoren ergeben bei der Polymerisation von 1-Olefinen sehr hohe Katalysatorausbeuten.

Es sind auch Polymerisationskatalysatoren beschrieben worden, die durch gleichzeitige Umsetzung von chlorfreien Titanestern und Säurehalogeniden mit Magnesiumalkoholaten gebildet werden (vgl. DE—A 2 111 455). Diese Katalysatoren zeichnen sich ebenfalls durch sehr eine hohe Aktivität aus.

Weiterhin sind Polymerisationskatalysatoren bekannt, die durch Umsetzung von Magnesiumalkoholaten mit Aluminiumalkylhalogeniden und anschließende Umsetzung mit Titanhalogeniden erhalten werden (vgl. DE—A 2 123 356).

Außerdem sind Polymerisationskatalysatoren beschrieben worden, die durch Umsetzung von Magnesiumalkoholaten mit Titanestern und Aluminiumhalogeniden gebildet werden (DE—A 2 259 516).

Schließlich sind Polymerisationskatalysatoren bekannt, die durch Umsetzung von Magnesiumalkoholaten mit Halogenierungsmitteln wie HCl, $SOCl_2$, $NH_4Cl$ usw. und anschließendes Umsetzen mit Titanverbindungen erhalten werden (vgl. DE—A 2 146 685).

In allen drei Fällen zeichnen sich die erhaltenen Katalysatoren durch eine hohe Aktivität aus.

Es wurde nun gefunden, daß sich die hohe Aktivität der bekannten Polymerisationskatalysatoren auf Basis von Metallalkoholaten noch beträchtlich steigern läßt, wenn man diese mit Säurehalogeniden der 3. und 4. Haupt- und 4. Nebengruppe des Periodensystems nachbehandelt.

Gegenstand der Erfindung ist daher ein Verfahren zur Herstellung eines Mischkatalysators, welcher aus einer ein Übergangsmetall enthaltenden Verbindunge (Komponente A) und einem Aktivator (Komponente B) besteht, durch Umsetzung einer Übergangsmetallverbindung mit einem Metallalkoholat und Mischen des Reaktionsproduktes mit dem Aktivator, dadurch gekennzeichnet, daß man zur Herstellung der Komponente A den in Kohlenwasserstoffen unlöslichen Feststoff aus der Reaktion zwischen der Übergangsmetallverbindung und dem Metallalkoholat mit einem Säurehalogenid reagieren läßt.

Gegenstand der Erfindung ist weiterhin der nach diesem Verfahren hergestellte Katalysator und seine Verwendung zum Polymerisieren von 1-Olefinen.

Zur Herstellung der Komponente A wird zunächst ein Metallalkoholat mit einer halogenhaltigen Titan(IV)-verbindung umgesetzt zu einer Komponente a, welche danach mit einem Säurehalogenid zur Reaktion gebracht wird.

Als Metallalkoholate eignen sich solche der Formel

$$[Me^1_x(OR)_v]Me^2_yMe^3_zH_w,$$

worin $Me^1$, $Me^2$, $Me^3$ jeweils ein Metall der I., II., III. oder IV. Hauptgruppe oder der I., II., IV. und V. Nebengruppe des Periodensystems der Elemente, vorzugsweise Li, Na, K, Mg, Ca, Al, Si, Ti, Zr, insbesondere Mg, Al, Si, Ti, Zr, R einen Kohlenwasserstoffrest mit 1 bis 20 Kohlenstoffatomen, vorzugsweise mit 1 bis 6 Kohlenstoffatomen, insbesondere einen Alkylrest mit 1 bis 6 Kohlenstoffatomen, x eine ganze Zahl von 1 bis 5, y eine ganze Zahl von 0 bis 2, z eine ganze Zahl von 0 bis 2, v eine ganze Zahl von 2 bis 8 und w entweder 0 oder 1 bedeuten, mit der Maßgabe, daß

$$(\text{Valenz } Me^1) \,.\, x+(\text{Valenz } Me^2) \,.\, y+(\text{Valenz } Me^3) \,.\, z+w=v$$

ist.

Die Herstellung der einfachen Metallalkoholate (w, y und z in der obigen Formel=0) erfolgt nach an sich bektannten Methoden. So kann man beispielsweise das Metall mit dem wasserfreien Alkohol umsetzen oder ein Alkoholat eines niederen Alkohols mit einem höheren Alkohol zur Reaktion bringen oder eine doppelte Umsetzung zwischen einem Alkalialkoholat und einem wasserfreien Metallhalogenid durchführen.

Als einfache Metallalkoholate werden besonders bevorzugt die Alkoholate von Magnesium, zum Beispiel $Mg(OC_2H_5)_2$, $Mg(OiC_3H_7)_2$, $Mg(OiC_4H_9)_2$, Mg-Phenolat.

Die Herstellung der komplexen Metallalkoholate (Alkoxosalze) erfolgt ebenfalls nach bekannten Methoden (Lit.: Meerwein, Ann. *455* (1927) Seite 227, *476* (1929) Seite 113; Houben-Weyl, Methoden der organischen Chemie, Band 6/2, Seite 30).

Für die Herstellung der komplexen Metallalkoholate seien folgende Beispiele genannt:

1) Man läßt zwei Metallalkoholate in einem geeigneten Lösungsmittel aufeinander einwirken, zum Beispiel

$$Ti(OR)_4+Mg(OR)_2 \rightarrow Mg[Ti(OR)_6]$$

2) Auflösen eines Metalls in einer alkoholischen Lösung eines Metallalkoholats

$$LiOR+Al+3\ ROH \rightarrow [Al(OR)_4]Li+1,5\ H_2$$

3) Gleichzeitiges Auflösen zweier Metalle in Alkohol

$$8\ ROH+Mg+2\ Al \rightarrow [Al_2(OR)_8]Mg+4\ H_2$$

4) Neutralisieren der den komplexen Metallalkoholaten zugrundeliegenden Alkoxosäuren in alkoholischer Lösung mit einem alkalisch reagierenden Metallalkoholat; zum Beispiel

$$H_2[Ti(OR)_6]+LiOR \rightarrow LiH[Ti(OR)_6]+ROH$$

$$LiH[Ti(OR)_6]+LiOR \rightarrow Li_2[Ti(OR)_6]+ROH$$

5) Doppelte Umsetzung der Alkalisalze von Alkoxosäuren mit wasserfreien Metallchloriden

$$ZrCl_4+6\ NaOR+\xrightarrow{ROH}[Zr(OR)_6]Na_2+4\ NaCl$$

$$ZrCl_4+3\ MgOR+\xrightarrow{ROH}[Zr(OR)_6]Mg+2\ MgCl$$

Für die Herstellung der komplexen Metallalkoholate lassen sich beispielsweise folgende Metallalkoholate verwenden:

$Li(OiC_3H_7)$; $Mg(OC_2H_5)_2$; $Mg(OiC_3H_7)_2$; $Al(OiC_3H_7)_3$; $Al(O\ sec\ C_4H_9)_3$; $B(OiC_3H_7)_3$; $Si(OC_2H_5)_4$; $Ti(OiC_3H_7)_4$; $Ti(O(CH_2)_2O—)_2$; $Zr(OiC_3H_7)_4$.

Beispiele für komplexe Metallalkoholate sind:

$[Mg(OiC_3H_7)_4]Li_2$; $[Al_2(OiC_3H_7)_8]Mg$; $[Si(OR)_6]Mg$; $[Zr—(OiC_3H_7)_6]Mg$; $[Ti(OC_2H_9)_6]Mg$; $[Mg(OC_4H_9)_4]Na_2$; $[Mg(OC_2H_5)_3]H$; $[Ti(OiC_3H_7)_4(OC_2H_5)_2]Mg$; $[Al_2(OiC_4H_9)_8]Mg$; $[Al_2(—secC_4H_9)_6(OC_2H_5)_2]Mg$.

Unter den komplexen Metallalkoholaten werden diejenigen, welche Magnesium und daneben Aluminium und/oder Silicium enthalten, besonders bevorzugt.

Die Umsetzung des Metallalkoholats mit der halogenhaltigen Titan-(IV)-verbindung wird in einem inerten Dispergiermittel durchgeführt, in welchem das Alkoholat zunächst suspendiert wird.

Als inertes Dispergiermittel eignet sich ein aliphatischer oder cycloaliphatischer Kohlenwasserstoff, wie Pentan, Hexan, Heptan, Cyclohexan, Methylcylohexan, sowie ein aromatischer Kohlenwasserstoff, wie Benzol, Toluol, Xylol; auch Benzin- oder Dieselölfraktionen, welche sorgfältig von Sauerstoff, Schwefelverbindungen und Feuchtigkeit befreit worden sind, sind brauchbar.

Zu dieser Suspension wird anschließend eine halogenhaltige Titan-(IV)-verbindung bei einer Temperatur von 20 bis 200°C, vorzugsweise von 50 bis 150°C zugegeben und das Gemisch bei dieser Temperatur vorzugsweise 2 bis 100 Stunden gerührt.

Die halogenhaltige Titan-(IV)-verbindung ist eine Verbindung der Formel $TiX_n(OR^1)_{4-n}$, worin n=1 bis 4 und X=Chlor oder Brom ist und $R^1$ einen Kohlenwasserstoffrest, vorzugsweise einen Alkyl-, Aryl- oder Aralkylrest mit 1 bis 12, vorzugsweise mit 1 bis 8, insbesondere einen geradkettigen oder verzweigten Alkylrest mit 1 bis 8 Kohlenstoffatomen bedeutet, wie zum Beispiel $TiCl_4$, $TiCl_3(O—n—C_3H_7)$, $TiCl_2(O—n—C_3H_7)_2$, $TiCl(O—n—C_3H_7)_3$, $TiCl_2(O—i—C_3H_7)_2$, $TiCl_3(O—i—C_3H_7)$, $TiCl_3(O—CH_2C_6H_5)$, $TiCl_2(O—CH_2C_6H_5)_2$, $TiCl_3(O—i—C_4H_9)$ und $TiCl_2(O—i—C_4H_9)_2$.

Besonders bevorzugt sind Titantetrachlorid, $TiCl_2(O—i—C_3H_7)_2$ und $TiCl_3(O—i—C_3H_7)$.

Das Molverhältnis von Metallalkoholat zu Titanverbindung liegt im Bereich 1:0,5 bis 1:25, vorzugsweise 1:1 bis 1:5.

Nach der Umsetzung wird der in Kohlenwasserstoffen unlösliche Feststoff (=Komponente a) vom Reaktionsmedium abgetrennt und mit dem Dispergiermittel ausgewaschen, bis in der Waschflüssigkeit kein Halogen mehr nachweisbar ist.

Sodann wird die Komponente a wieder im gleichen oder in einem anderen Dispergiermittel der schon genannten Gruppe suspendiert und mit einem Säurehalogenid zur Reaktion gebracht. Verwendet werden Säurehalogenide der Hauptgruppe III und/oder IV und/oder der Nebengruppe IV des Periodensystems der Elemente. Als Beispiele seien genannt: $BF_3$, $BCL_3$, $BBr_3$, $BJ_3$, $AlCl_3$, $AlBr_3$, $SiCl_4$, $SiBr_4$, $GeCl_4$, $TiCl_4$, $BrCl_4$, $ZrBr_4$. Bevorzugt verwendet werden die Säurechloride, besonders bevorzugt die Verbindungen $BCl_3$, $AlCl_3$, $SiCl_4$ und $ZrCl_4$.

Das Molverhältnis bei der Umsetzung der Komponente a mit dem Säurehalogenid beträgt 1:0,1 bis 1:20, vorzugsweise 1:0,5 bis 1:5, bezogen auf das Metall des ursprünglichen Metallalkoholats, d.h. 1 Mol des ursprünglichen Metallalkoholats werden mit 0,2 bis 20, vorzugsweise 0,5 bis 5 Mol Säurehalogenid umgesetzt.

Die Reaktion wird unter Rühren bei einer Temperatur von 0 bis 200°C, vorzugsweise 25 bis 120°C durchgeführt und dauert 0,5 bis 100 Stunden, vorzugsweise 2 bis 24 Stunden.

Das Säurehalogenid kann auf einmal zur Komponente a gegeben werden, es ist jedoch vorteilhaft, es in einem Zeitraum von 1 bis 10 Stunden zuzudosieren. Die optimale Dosierdauer hängt von der Größe des Ansatzes ab.

Die so erhaltene Komponente A kann nun direkt zur Polymerisation verwendet werden. Es ist jedoch zweckmäßig, die bei der Umsetzung der Komponente a mit dem Säurehalogenid entstandenen löslichen Reaktionsprodukte durch Waschen mit dem Dispergiermittel zu entfernen.

Die Komponente A enthält je nach Umsetzungsbedingungen Titan in einer Menge von 0,1 bis 10 Gew.-%. Sie wird entweder in Form einer Suspension, oder nach Entfernung des Dispergiermittels und Trocknung zusammen mit der Komponente B zur Polymerisation verwendet.

Als Komponente B werden organische Verbindungen der Metalle der Hauptgruppe I, II und III des Periodensystems verwendet Vorzugsweise werden jedoch als Komponente B aluminiumorganische Verbindungen eingesetzt.

Geeignete aluminiumorganische Verbindungen sind die Umsetzungsprodukte von Aluminiumtrialkylen oder Aluminiumdialkylhydriden, die Alkylreste mit 1 bis 16 Kohlenstoffatomen enthalten, mit 4 bis 20 Kohlenstoffatomen enthaltenden Dienen. Vorzugsweise werden die Umsetzungsprodukte von Aluminiumtrialkylen oder Aluminiumdialkylhydriden, deren Alkylreste 4 bis 8 Kohlenstoffatome enthalten, mit Phellandren oder einem Dien der Formel

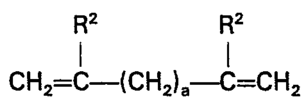

worin $R^2$ Wasserstoff, einen Alkylrest, einen Alkenylrest mit einer innenständigen Doppelbindung oder einen einkernigen Arylrest und a=0 oder 1 bedeutet. Beispiele für derartige Diene sind 1,4-Butadien, Isopren, 2-Phenylbutadien, 1,4-Pentadien, 1,3-Pentadien, Myrcen. Besonders bevorzugt werden die Umsetzungsprodukte von $Al(i—C_4H_9)_3$ oder $Al(i—C_4H_9)_2H$ mit Isopren verwendet. Zu diesen Umsetzungsprodukten gehören beispielsweise Verbindungen der Formel

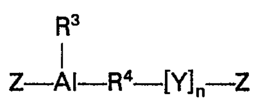

worin Y die Gruppe

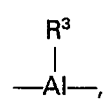

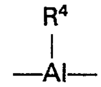

oder

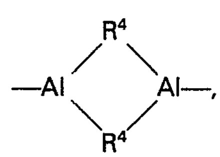

Z Wasserstoff, die Isobutylgruppe, die Dihydroisoprenylgruppe oder ein Oligomeres dieser Gruppe, $R^3$ den Isobutylrest, $R^4$ den Tetrahydroisoprenylenrest und n eine Zahl von 1 bis 20 bedeutet, und Verbindungen der Formel

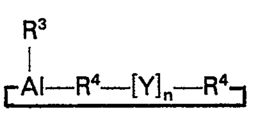

worin Y, $R^3$, $R^4$ und n die obengenannte Bedeutung haben Das Verhältnis $C_5$-Reste zu $C_4$-Reste in den Umsetzungsprodukten von $Al(i—C_4H_9)_3$ oder $Al(i—C_4H_9)_2H$ mit Isopren kann im allgemeinen 0,25 bis 10, vorzugsweise 1 bis 4, betragen. Ganz besonders bevorzugt wird eine Verbindung dieser Art verwendet, welche unter dem Namen "Aluminiumisoprenyl" im Handel erhältlich ist.

Weiterhin eignen sich als Komponente B, chlorhaltige aluminiumorganische Verbindungen, wie Dialkylaluminiummonochloride der Formel $R^5{}_2AlCl$ oder Alkylaluminiumsesquiloride der Formel $R^5{}_3Al_2Cl_3$, worin $R^5$ einen Kohlenwasserstoffrest mit 1 bis 16 Kohlenstoffatomen, vorzugsweise einen Alkylrest mit 1 bis 16, insbesondere 2 bis 4 Kohlenstoffatomen bedeutet. Als Beispiele seien genannt:

$$(C_2H_5)_2AlCl,\ (i\text{—}C_4H_9)_2AlCl,\ (C_2H_5)_3Al_2Cl_3$$

Besonders vorteilhaft werden als Komponente B Aluminiumtrialkyle der Formel $AlR^5$ oder Aluminiumdialkyhydride der Formel $AlR^5{}_2H$ eingesetzt, in denen $R^5$ einen Kohlenwasserstoffrest mit 1 bis 16 Kohlenstoffatomen, vorzugsweise einen Alkylrest mit 1 bis 16, insbesondere 2 bis 4 Kohlenstoffatomen bedeutet, wie $Al(C_2H_5)_3$, $Al(C_2H_5)_2H$, $Al(C_3H_7)_3$, $Al(i\text{—}C_4H_9)_3$, $Al(i\text{—}C_4H_9)_2H$.

Die Überführung der Titan-(IV)-verbindung der Komponente A in die polymerisationsaktive, niedrigere Wertigkeitsstufe erfolgt zweckmäßigerweise während der Polymerisation durch die metallorganische Verbindung (Komponente B) bei einer Temperatur von 20 bis 150°C, vorzugsweise 60 bis 140°C.

Die Komponente A kann jedoch auch vor der Polymerisation mit einer metallorganischen Verbindung behandelt und anschließend in die Polymerisation eingesetzt werden. Dies geschieht bei einer Temperatur von 20 bis 150°C, vorzugsweise 25 bis 120°C, bei einem Molverhältnis metallorganischer Verbindung zu Titanverbindung, ausgedrückt als Metall: Titan, von 0,2:1 bis 3:1, vorzugsweise von 0,5:1 bis 2:1. Bei Verwendung einer chlorhaltigen metallorganischen Verbindung empfiehlt es sich jedoch, das erhaltene Reaktionsprodukt mit frischem Dispergiermittel zu waschen. Anschließend erfolgt Aktivierung mit weiterer metallorganischer Verbindung bei einer Temperatur von 20 bis 150°C.

Mit dem erfindungsgemäßen Katalysator wird mindestens ein 1-Olefin der Formel $R^6\text{—}CH{=}CH_2$ polymerisiert, worin $R^6$ Wasserstoff oder einen geradkettigen oder verzweigten Alkylrest mit 1 bis 10, vorzugsweise 1 bis 8 Kohlenstoffatomen bedeutet. Beispielsweise seien Äthylen, Propylen, Buten-(1), Hexen-(1), 4-Methylpenten-(1), Octen-(1) genannt. Vorzugsweise wird Äthylen allein oder als Gemisch von mindestens 70 Gewichtsprozent Äthylen und maximal 30 Gewichtsprozent eines anderen 1-Olefins der obigen Formel polymerisiert. Insbesondere wird Äthylen allein oder ein Gemisch von mindestens 90 Gewichtsprozent Äthylen und maximal 10 Gewichtsprozent eines anderen 1-Olefins der obigen Formel polymerisiert.

Das Molekulargewicht des Polymers wird in bekannter Weise geregelt; vorzugsweise wird dazu Wasserstoff verwendet.

Die Polymerisation wird in Lösung, in Suspension oder in der Gasphase, kontinuierlich oder diskontinuierlich, bei einer Temperatur von 20 bis 200°C, vorzugsweise 50 bis 150°C, durchgeführt. Der Druck beträgt 0,5 bis 50 bar. Bevorzugt ist die Polymerisation in dem technisch besonders interessanten Druckbereich von 2 bis 25 bar.

Dabei wird die Titanverbindung in einer Konzentration von 0,0001 bis 0,1, vorzugsweise 0,001 bis 0,05 mMol pro Liter Dispergiermittel bzw. Reaktorvolumen angewendet. Die metallorganische Verbindung wird in einer Konzentration von 0,1 bis 5 mMol, vorzugsweise 0,5 bis 4 mMol pro Liter Dispergiermittel bzw. pro Liter Reaktorvolumen verwendet. Prinzipiell sind aber auch höhere Konzentrationen möglich.

Die Suspensions- oder Lösungspolymerisation wird in einem der für das Ziegler-Niederdruckverfahren gebräuchlichen inerten Lösungsmittel durchgeführt, wie sie bereits weiter oben beschrieben wurden.

Der erfindungsgemäße Katalysator ergibt infolge seiner hohen Aktivität Polymerisate mit sehr geringem Titan- und Halogengehalt und daher äußerst guten Werten im Farbbeständigkeits- und Korrosionstest. Gegenüber einem Katalysator, der die gleiche Komponente a enthält, die jedoch nicht mit dem Säurehalogenid umgesetzt wurde, liefert der erfindungsgemäße Katalysator eine ca. 20-fache Menge an Polymer. Somit werden Polymerisationsverfahren mit sehr hohen Raum-Zeit-Ausbeuten möglich.

Mit dem mit $BCl_3$ nachbehandelten Mg-äthylat-$TiCl_4$-Katalysator können daher Polymere mit einem Titangehalt von ca. 0,2 ppm erhalten werden. Derartige Polyolefine können in Anwendungsbereichen verwendet werden, in denen es auf extrem niedrige Schwermetallgehalte ankommt.

Beispiele

Bei den nachfolgenden Beispielen wird zur Kontaktherstellung und zur Polymerisation eine hydrierte Dieselölfraktion mit einem Siedebereich von 130—170°C verwendet.

Der Titangehalt der Katalysatoren wird kolorimetrisch bestimmt (Lit. G. O. Müller, Praktikum der quantitativen chemischen Analyse 4, Auflage (1957) S. 243).

Der Schmelzindex wird nach DIN 53 735 (E) bestimmt.

Die Polymerisationen werden in einem 1,5 l Laborautoklaven in 0,75 l der oben angegebenen Dieselölfraktion bei einer Temperatur von 85°C, einer Reaktionszeit von 2 h und einem maximalen Polymerisationsdruck von 21 bar durchgeführt. Die erhaltenen Polymerisate werden durch Filtration der Suspension isoliert und anschließend im Vakuumtrockenschrank bei 80°C getrocknet.

Die Beispiele 1—4 beschreiben die Herstellung der Komponente a, die Beispiele 5—18 die Herstellung der Komponente A aus der Komponente a und die Beispiele 19—39 die Polymerisation mit Hilfe der erfindungsgemäß hergestellten Komponente A.

Beispiel 1

11,4 g (0,1 Mol) $Mg(OC_2H_5)_2$ werden in 100 ml Dieselöl suspendiert und mit 37,8 g (0,2 Mol) $TiCl_4$ versetzt. Die Suspension wird 1 h bei 130°C gerührt. Anschließend wird der Niederschlag unter $N_2$ abfiltriert und gründlich mit Dieselöl ausgewaschen.

Die so gewonnene Komponente a 1 enthält laut Analyse

66 g Ti/kg Feststoff
175 g Mg/kg Feststoff
576 g Cl/kg Feststoff

Beispiel 2

11,4 g Mg $(OC_2H_5)_2$ werden in 100 ml Dieselöl suspendiert und mit 18,9 g (0,1 Mol) $TiCl_4$ versetzt. Die Suspension wird 2 h bei 130°C gerührt. Anschließend wird der Niederschlag unter $N_2$ abfiltriert und gründlich mit Dieselöl ausgewaschen.

Diese Komponente a 2 enthält laut Analyse

93 g Ti/kg Feststoff
140 g Mg/kg Feststoff
511 g Cl/kg Feststoff

Beispiel 3

21,4 g (0,15 Mol) Magnesiumisopropylat werden in 150 ml Dieselöl suspendiert und mit 28,4 g (0,15 Mol) $TiCl_4$ versetzt. Die Suspension wird 8 h bei 25°C gerührt. Anschließend wird der Niederschlag unter $N_2$ abfiltriert und gründlich mit Dieselöl nachgewaschen.

Die auf diese Weise hergestellte Komponente a 3 enthält laut Analyse:

126 g Ti/kg Feststoff
77 g Mg/kg Feststoff
350 g Cl/kg Feststoff

Beispiel 4

186,6 g (1,66 Mol) $Mg(OC_2H_5)_2$, 176,6 g (0,834 Mol) $Al(OiC_3H_7)_3$ und 474 g (1,66 Mol) $Ti(OiC_3H_7)_4$ werden in 1,4 l Dieselöl suspendiert. Unter Rühren wird bei 80°C innerhalb von 2 h 633,2 g (3,32 Mol) $TiCl_4$ zugetropft. Die Suspension wird 8 h bei 80°C gerührt. Der Niederschlag wird abfiltriert und gründlich mit Dieselöl gewaschen, bis das Filtrat frei von Halogen ist. Anschließend wird die Suspension mit Dieselöl auf ein Volumen von 2,5 l aufgefüllt.

Die Suspension enthält 0,8 Mol Titan.

Der Feststoff (Komponente a 4) enthält laut Analyse:

184 g Ti/kg Feststoff
71 g Mg/kg Feststoff
318 g Cl/kg Feststoff

Beispiel 5

Zu 0,1 Mol (bezogen auf Mg) von Komponente a1 in 200 ml Dieselöl werden 0,05 Mol $SiCl_4$ gegeben und die Mischung wird 8 h bei 60°C gerührt. Der im Dieselöl unlösliche Feststoff wird unter $N_2$ abfiltriert und mit Dieselöl ausgewaschen, bis das Filtrat frei von Halogen ist.

Die Katalysatorkomponente A 1 enthält laut Analyse:

3,2 g Ti/kg Feststoff
204,2 g Mg/kg Feststoff
608,7 g Cl/kg Feststoff

Beispiel 6—Beispiel 16

Die Herstellung der weiteren Katalysatorkomponenten A erfolgt wie unter Beispiel 5 beschrieben. Die Ausgangsverbindungen und Darstellungsbedingungen sind in Tabelle I zusammengefaßt.

Beispiel 17

Zu 100 ml der Suspension von Komponente a 4 (80 mMol Ti) wird bei 25°C unter Rühren eine Lösung von 10 g $BCl_3$ (85,4 mMol) in 100 ml Dieselöl innerhalb von 60 min zugetropft. Anschließend wird 2 h bei 25°C gerührt und der Niederschlag durch Filtration und Waschen mit Dieselöl ausgewaschen, bis das Filtrat frei von Halogen ist. Danach wird das Volumen der Suspension mit Dieselöl auf 200 ml eingestellt.

Die Suspension enthält 2 mMol Titanverbindung (Komponente A 13).

Beispiel 18

Zu 200 ml der obigen Suspension von Komponente a4 werden bei 50°C unter Rühren 50 ml $SiCl_4$ (0,436 Mol) innerhalb von 60 Min. zugetropft. Anschließend wird 5 h bei 50°C gerührt und der Niederschlag abfiltriert und mit Dieselöl ausgewaschen, bis das Filtrat frei von Halogen ist. Danach wird das Volumen der Suspension durch Dieselölzugabe auf 250 ml gebracht.

Die Suspension enthält 27,5 mMol Titanverbindung (Komponente A14).

Beispiel 19

In einem 1,5 l Autoklaven werden 750 ml Dieselöl vorgelegt und mit $N_2$ gespült. Dann werden 1 mMol Al-triisobutyl und 0,001 mg Atom Ti enthaltende Katalysatorkomponente A 1 zugegeben. Danach werden 4,5 bar $H_2$ aufgedrückt, und Äthylen je nach Bedarf zugegeben, so daß sich ein Druck von 21 bar einstellt. Nach 2 stündiger Polymerisation bei 85°C wird die Reaktion abgebrochen und das Polymere abfiltriert und getrocknet. Es werden 172 g Polyäthylen mit einem $i_5$-Wert von 0,7 g/10 min erhalten. Pro mMol Titanverbindung bilden sich 172 000 g Polyäthylen bzw. pro Gramm Titan bildet sich 3595 000 g Polyäthylen. Pro Gramm Feststoff werden 11 500 g Polyäthylen erhalten.

Beispiele 20—39 und Vergleichsbeispiele A—E

Die weiteren Polymerisationen erfolgen wie im Beispiel 19 beschrieben. Die abweichenden Bedingungen und Ergebnisse sind in Tabelle II zusammengefaßt.

Tabelle 1

| Beispiel | Komponente A | Ausgangs-komponente a | Mol | Säurechlorid (mMol) | Reaktions-temp. °C | Gew.-% Ti | Gew.-% Mg | Gew.-% Cl |
|---|---|---|---|---|---|---|---|---|
| 6 | A 2 | a 1 | 0,1 | $SiCl_4$ 25 | 60 | 0,36 | 20,0 | 58,9 |
| 7 | A 3 | a 1 | 0,1 | $BCl_3$ 66 | 25 | 0,89 | 17,7 | 55,7 |
| 8 | A 4 | a 1 | 0,1 | $BCl_3$ 25 | 25 | 2,3 | 17,8 | 54,8 |
| 9 | A 5 | a 1 | 0,1 | $AlCl_3$ 66 | 85 | 1,4 | 19,5 | 64,1 |
| 10 | A 6 | a 2 | 0,1 | $BCl_3$ 50 | 25 | 1,4 | 15,4 | 47,5 |
| 11 | A 7 | a 2 | 0,1 | $SiCl_4$ 50 | 60 | 0,32 | 18,7 | 54,5 |
| 12 | A 8 | a 2 | 0,1 | $AlCl_3$ 66 | 85 | 0,91 | 16,5 | 75,9 |
| 13 | A 9 | a 3 | 0,1 | $SiCl_4$ 50 | 60 | | | |
| 14 | A 10 | a 1 | 0,1 | $ZrCl_4$ 20 | 85 | 1,26 | 15,4 | 53,0 |
| 15 | A 11 | a 1 | 0,1 | $ZrCl_4$ 50 | 85 | 0,88 | 10,6 | 49,8 |
| 16 | A 12 | a 1 | 0,1 | $ZrCl_4$ 100 | 85 | 0,37 | 7,2 | 49,6 |

Tabelle II

| Beispiel Nr. | Katalysator-komponente A (mg Atom Ti) | Aluminium-alkyl | Wasserstoff (bar) | Polymerisations-druck (bar) | Ausbeute (g) | Kontakt-ausbeute (kg/gTi) | Schmelzindex $i^5$ (g/10) |
|---|---|---|---|---|---|---|---|
| 20 | A 2 (0,005) | ATIB | 4,5 | 21 | 211 | 882 | 2,4 |
| 21 | A 3 (0,001) | ATIB | 4,5 | 21 | 261 | 5455 | 3,0 |
| 22 | A 4 (0,005) | ATIB | 4,5 | 21 | 195 | 815 | 1,1 |
| 23 | A 5 (0,0025) | ATIB | 4,5 | 21 | 218 | 1822 | 2,4 |
| 24 | A 5 (0,0025) | ATE | 4,5 | 21 | 185 | 1547 | 1,8 |
| 25 | A 6 (0,01) | ATIB | 4,5 | 21 | 304 | 635 | 3,0 |
| 26 | A 6 (0,005) | ATE | 4,5 | 21 | 158 | 660 | 4,2 |
| 27 | A 7 (0,0025) | ATIB | 4,5 | 21 | 166 | 1388 | 1,0 |
| 28 | A 7 (0,004) | ATE | 4,5 | 21 | 269 | 1406 | 1,7 |
| 29 | A 8 (0,004) | ATIB | 4,5 | 21 | 278 | 1453 | 3,6 |
| 30 | A 8 (0,002) | ATE | 4,5 | 21 | 195 | 2038 | 2,8 |
| 31 | A 9 (0,005) | ATIB | 4,5 | 21 | 156 | 650 | 1,5 |
| 32 | A 10 (0,006) | ATIB | 4,5 | 21 | 206 | 718 | 1,5 |
| 33 | A 10 (0,015) | IPRA | 4,5 | 21 | 210 | 293 | 0,6 |
| 34 | A 11 (0,01) | ATIB | 4,5 | 21 | 176 | 368 | 0,6 |
| 35 | A 11 (0,02) | IPRA | 8,0 | 21 | 230 | 240 | 0,2 |
| 36 | A 12 (0,007) | ATE | 8,0 | 21 | 220 | 657 | 0,1 |
| 37 | A 12 (0,005) | IPRA | 8,0 | 21 | 160 | 669 | 0,5 |
| 38 | A 13 (0,0015) | ADIBH | 6,0 | 16 | 176 | 2450 | 0,8 |
| 39 | A 14 (0,011) | ADIBH | 6,0 | 16 | 128 | 243 | 0,4 |
| Vergleich A | 0,02 a 1 | ATIB | 4,5 | 21 | 205 | 285 | 6,3 |
| Vergleich B | 0,03 a 2 | ATIB | 4,5 | 21 | 173 | 121 | 4,5 |
| Vergleich C | 0,02 a 3 | ATIB | 4,5 | 21 | 236 | 247 | 0,7 |
| Vergleich D | 0,02 a 4 | ATE | 4,5 | 21 | 240 | 251 | 2,0 |
| Vergleich E | 0,032 a 4 | ADIBH | 6,0 | 16 | 124 | 81 | 0,5 |

ATE=Aluminiumtriäthyl
ATIB=Aluminiumtriisobutyl
IPRA=Isoprenylaluminium
ADIBH=Aluminiumdiisobutylhydrid

**Patentansprüche**

1. Verfahren zur Herstellung eines Mischkatalysators, welcher aus einer ein Übergangsmetall enthaltenden Verbindung (Komponente A) und einem Aktivator (Komponente B) besteht, durch Umsetzung einer Übergangsmetallverbindung mit einem Metallalkoholat und Mischen des Reaktionsproduktes mit dem Aktivator, dadurch gekennzeichnet, daß man zur Herstellung der Komponente A den in Kohlenwasserstoffen unlöslichen Feststoff aus der in einem inerten Dispergiermittel unter Rühren bei einer Temperatur von 20 bis 200°C durchgeführten Reaktion zwischen 0,5 bis 25 Mol einer halogenhaltigen Titan-(IV)-verbindung der Formel $TiX_n(OR^1)_{4-n}$, worin n=1 bis 4 und X=Chlor oder Brom ist und $R^1$ einen Kohlenwasserstoffrest mit 1 bis 12 Kohlenstoffatomen bedeutet, und 1 Mol eines Metallalkoholats der Formel

$$[Me^1_x(OR)_v]Me^2_yMe^3_zH_w$$

worin $Me^1$, $Me^2$, $Me^3$ jeweils ein Metall der I., II., III. oder IV. Hauptgruppe oder der I., II., IV. und V. Nebengruppe des Periodensystems der Elemente, R einen Kohlenwasserstoffrest mit 1 bis 20 Kohlenstoffatomen, x eine ganze Zahl von 1 bis 5, y eine ganze Zahl von 0 bis 2, z eine ganze Zahl von 0 bis 2, v eine ganze Zahl von 2 bis 8 und w entweder 0 oder 1 bedeuten, mit der Maßgabe, daß

$$(\text{Valenz } Me^1) \cdot x+(\text{Valenz } Me^2) \cdot y+(\text{Valenz } Me^3) \cdot z+w=v$$

ist, nach dem Abtrennen vom Reaktionsmedium und Auswaschen mit dem Dispergiermittel mit einem Säurehalogenid der Hauptgruppe III und IV oder der Nebengruppe IV des Periodensystems der Elemente im Molverhältnis Feststoff zu Säurehalogenid von 1:0,1 bis 1:20, bezogen auf das Metall des ursprünglichen Metallalkoholats, bei einer Temperatur von 0 bis 200°C während 0,5 bis 100 Stunden reagieren läßt und die so erhaltene Komponente A mit einer organischen Verbindung eines Metalls der Hauptgruppe I, II und III des Periodensystems mischt.

2. Mischkatalysator, welcher aus einer ein Übergangsmetall enthaltenden Verbindung (Komponente A) und einem Aktivator (Komponente B) besteht, hergestellt nach dem Verfahren gemäß Anspruch 1.

3. Verwendung des Mischkatalysators gemäß Anspruch 2 zur Polymerisation von 1-Olefinen.

4. Verfahren zur Herstellung eines Polyolefins durch Polymerisieren von mindestens einem 1-Olefin der Formel $R^6—CH=CH_2$, worin $R^6$ Wasserstoff oder einen geradkettigen oder verzweigten Alkylrest mit 1 bis 10 Kohlenstoffatomen bedeutet, in Gegenwart eines Mischkatalysators, hergestellt nach dem Verfahren gemäß Anspruch 1.

**Revendications**

1. Procédé de préparation d'un catalyseur mixte constitué d'un composé contenant un métal de transition (composante A) et d'un activant (composante B), par réaction d'un composé d'un métal de transition avec un alcoolate de métal et mélange du produit réactionnel avec l'activant, procédé caractérisé en ce que, pour préparer la composante A, on fait réagir à une température de 0 à 200°C, pendant 0,5 à 100 heures:

— la matière solide, insoluble dans des hydrocarbures, provenant de la réaction, effectuée dans un milieu dispersant inerte, sous agitation, à une température de 20 à 200°C, entre 0,5 et 25 moles d'un composé halogéné du titane (IV) répondant à la formule

$$TiX_n(OR^1)_{4-n}$$

dans laquelle n est un nombre de 1 à 4, X représente le chlore ou le brome et $R^1$ représente un radical hydrocarboné contenant de 1 à 12 atomes de carbone,
et 1 mole d'un alcoolate de métal répondant à la formule

$$[Me^1_x(OR)_v]Me^2_yMe^3_zH_w$$

dans laquelle $Me^1$, $Me^2$ et $Me^3$ représentent chacun un métal d'un des groupes principaux I, II, III et IV ou d'un des sous-groupes I, II, IV et V de la classification périodique des éléments, R représente un radical hydrocarboné contenant de 1 à 20 atomes de carbone, x un nombre entier de 1 à 5, y un nombre entier de 0 à 2, z un nombre entier de 0 à 2, v un nombre entier de 2 à 8 et w est égal à 0 ou à 1, avec la relation d'égalité suivante:

$$(\text{valence } Me^1) \cdot x+(\text{valence } Me^2) \cdot y+(\text{valence } Me^3) \cdot z+w=v,$$

après avoir séparé ladite matière solide du milieu réactionnel et l'avoir lavée avec le milieu de dispersion,

avec:

— un halogénure d'acide dérivant d'un élément d'un des groupes principaux III et IV ou du sous-groupe IV de la classification périodique des éléments, dans un rapport molaire de la matière solide à l'halogénure d'acide de 1:0,1 à 1:20, relativement au métal de l'alcoolate métallique d'origine,

et on mélange la composante A ainsi obtenue avec un composé organique d'un métal d'un des groupes principaux I, II et III de la classification périodique.

2. Catalyseur mixte constitué d'un composé contenant un métal de transition (composante A) et d'un activant (composante B), qui a été préparé par le procédé de la revendication 1.

3. Application du catalyseur mixte de la revendication 2 à la polymérisation d'$\alpha$-oléfines.

4. Procédé de préparation d'une polyoléfine par polymérisation d'au moins une $\alpha$-oléfine répondant à la formule $R^6—CH=CH_2$ dans laquelle $R^6$ représente l'hydrogène ou un radical alkyle, linéaire ou ramifié, contenant de 1 à 10 atomes de carbone, en présence d'un catalyseur mixte qui a été préparé par le procédé de la revendication 1.

**Claims**

1. A process for the manufacture of a mixed catalyst consisting of a compound containing a transition metal (component A) and an activator (component B), by reaction of a transition metal compound with a metal alcoholate and mixture of the reaction product with the activator, which comprises reacting the solid product insoluble in hydrocarbons of the reaction under stirring at a temperature of from 20 to 200°C of from 0,5 to 25 moles of a halogen-containing titanium (IV) compound of the formula $TiX_n(OR^1)_{4-n}$, in which $n$ is 1 to 4, X is chlorine or bromine and $R^1$ is a hydrocarbon radical having from 1 to 12 carbon atoms and 1 mole of a metal alcoholate of the formula

$$[Me^1_x(OR)_v]Me^2_yMe^3_zH_w,$$

in which $Me^1$, $Me^2$, $Me^3$ each are a metal of the Ist, IInd, IIIrd of IVth main group or the Ist, IInd, IVth of Vth subgroup of the Periodic Table of the elements, R is a hydrocarbon radical having from 1 to 20 carbon atoms, $x$ is an integer of from 1 to 5; $y$ is an integer of from zero to 2; $z$ is an integer of from zero to 2; $v$ is an integer of from 2 to 8; and $w$ is either zero or 1, with the proviso that

$$(\text{valency } Me^1) . x+(\text{valency } Me^2) . y+(\text{valency } Me^3) . z+w=v,$$

after separating from the reaction medium and washing with the dispersing agent, at a temperature of from 0 to 200°C during 0,5 to 100 hours, with an acid halide of the main groups III or IV or the subgroup IV of the Periodic Table in a molar ratio of solid to acid halide of from 1:0,1 to 1:20, based upon the metal of the original metal alcoholate, in order to prepare component A, and mixing the thus obtained component A with an organic compound of a metal of the main groups I, II or III of the Periodic Table.

2. Mixed catalyst consisting of a compound containing a transition metal (component A) and an activator (component B), prepared according to the process as claimed in claim 1.

3. Use of the mixed catalyst as claimed in claim 2 for the polymerization of 1-olefins.

4. A process for the manufacture of a polyolefin by polymerization of at least one 1-olefin of the formula $R_6—CH=CH_2$, in which $R^6$ is hydrogen or a linear or branched alkyl radical having from 1 to 10 carbon atoms, in the presence of a mixed catalyst prepared by the process according to claim 1.